# FASCICULE DE BREVET EUROPEEN

(11) **EP 2 013 501 B1**
(45) Date de publication et mention de la délivrance du brevet: **31.07.2013**
(21) Numéro de dépôt: 07765983.7
(22) Date de dépôt: 02.05.2007
(51) Int. Cl.: F16D 23/14

(54) **BUTEE D'EMBRAYAGE**
KUPPLUNGSLAGER
CLUTCH BEARING

(30) Priorité: 03.05.2006 FR 0651580
(43) Date de publication de la demande: 14.01.2009
(73) Titulaire: Valeo Embrayages, 80009 Amiens Cedex 2 (FR)
(72) Inventeur: PERRY, Benoît, 80260 Pierrego (FR); BRABANDER, Xavier, 80450 Camon (FR); PISSON, Emmanuel, 80680 Hebecourt (FR); DUBOIS, Bernard, 80300 Albert (FR); REGULSKI, Bernard, 80600 Beauquesne (FR); DE MATOS, Filipe, 80000 Amiens (FR); DUSSEAUX, Fabrice, 80090 Amiens (FR)
(86) Numéro de dépôt international: PCT/FR2007/051200
(87) Numéro de publication internationale: WO 2007/125265

(56) Documents cités:
- GB-A- 2 162 275
- US-A- 4 143 748
- US-A- 4 874 073
- US-A- 4 913 276

## Description

La présente invention est relative à une butée d'embrayage, notamment du type poussé, dans laquelle le roulement est rendu solidaire du manchon par l'intermédiaire d'un élément élastique annulaire en vue de permettre l'autrocentrage du roulement. Une butée d'embrayage selon le préambule de la revendication 1 est connue de G-B-A-2 162 275.

Une butée de ce type est décrite dans le document US 3 416 637, et comprend un manchon de manoeuvre destiné à être déplacé en translation axiale par l'intermédiaire d'un organe de commande de débrayage. Sur ce manchon de manoeuvre est rapporté un roulement dont la bague intérieure est agencée pour agir sur le diaphragme de l'embrayage lors du déplacement en translation axiale du manchon. Pour assurer l'autocentrage de ce roulement, celui-ci est enchâssé dans une cuvette extérieure présentant un flan radial d'appui pour une rondelle élastique du type Belleville. Cette rondelle exerce une force axiale de serrage sur la bague extérieure du roulement afin de serrer cette bague extérieure contre une surface radiale antagoniste du manchon. De ce fait, le roulement est immobilisé axialement par rapport au manchon tout en conservant une certaine liberté de déplacement radial pour l'autocentrage.

La bague intérieure du roulement agit sur le diaphragme par l'intermédiaire d'une extension axiale annulaire dépassant sur une distance axiale relativement grande la face de la bague extérieure.

De la sorte, il est possible de loger dans un espace annulaire disponible entre le diaphragme et la face frontale de la bague extérieure, la rondelle élastique et le flan radial de la cuvette définissant la surface d'appui de cette dernière.

Dans cette construction antérieure, étant donné que la bague intérieure comporte seulement une extension axiale, elle n'offre qu'une petite surface d'appui annulaire frontale pour agir sur le diaphragme.

En cherchant à améliorer l'action de la bague intérieure sur le diaphragme, on a déjà pensé de la munir d'une aile radiale s'étendant radialement vers l'extérieur à partir de l'extension axiale devant la face frontale de la bague extérieure de manière à offrir une surface frontale d'appui sur le diaphragme nettement plus grande que celle de la seule l'extension axiale.

Cependant, cette solution connue en soi crée un problème ayant trait au montage de la rondelle élastique et de la cuvette sur le roulement. En effet, l'aile radiale de la bague intérieure empêche alors ce montage, sauf à agrandir suffisamment l'ouverture intérieure de la rondelle élastique et du flan de la cuvette. Ce n'est que dans ces conditions que la rondelle élastique et la cuvette peuvent être mises en place par un mouvement axial en passant au-delà de l'aile radiale de la bague intérieure. Cependant, en agrandissant ainsi les ouvertures de la rondelle élastique et du flan de la cuvette, leurs surfaces mutuelles en contact deviennent trop petites pour assurer convenablement et en toute sécurité l'accrochage du roulement sur le manchon de manoeuvre.

L'invention a pour but de résoudre ce problème et de fournir une butée comportant un roulement avec une bague interne présentant une aile radiale dont le diamètre extérieur soit très voisin du diamètre extérieur de la bague extérieure, procurant ainsi une grande surface d'action sur le diaphragme, et qui permette néanmoins d'utiliser une cuvette avec un flan radial d'appui pour la rondelle élastique suffisamment grand pour assurer l'accrochage en toute sécurité.

On atteint ce but de l'invention avec une butée d'embrayage, notamment de type poussé, selon la revendication 1.

Il résulte de ces caractéristiques qu'alors que l'aile radiale de la bague intérieure est agrandie et offre ainsi une grande surface d'action au diaphragme, la cuvette, et le cas échéant l'élément élastique annulaire, peuvent sans problème être mis en place, car le diamètre de l'ouverture du flan de la cuvette, et éventuellement également le diamètre de l'ouverture de l'élément élastique annulaire, peuvent être supérieurs à celui de l'aile radiale
- ledit anneau d'appui peut être emmanché sur une portée axiale ménagée sur la surface cylindrique extérieure de ladite bague extérieure en formant avec celle-ci un épaulement axial contre lequel est placé ledit anneau d'appui ;
- ledit anneau d'appui est de préférence placé autour de ladite bague extérieure de manière que le bord libre de sa partie axiale affleure la face frontale de la bague tournée vers l'aile radiale de la bague intérieure ;
- ledit anneau d'appui peut également être placé autour de ladite bague extérieure de manière que son flan radial affleure la face frontale de la bague tournée vers l'aile radiale de la bague intérieure ;
ledit élément élastique annulaire peut être une rondelle conique.

D'autres caractéristiques et avantages de la présente invention apparaîtront à la lecture de la description qui va suivre et à l'examen des figures annexées, dans lesquelles :
- la figure 1 est une vue en perspective éclatée d'une butée d'embrayage conforme à un premier mode de réalisation de l'invention ;
- la figure 2 est une vue partielle en coupe axiale de cette butée ;
- la figure 3 est une vue en perspective de cette butée en configuration assemblée ;
- la figure 4 est une vue partielle agrandie et en coupe axiale d'une butée conforme à une variante du premier mode de réalisation de l'invention ;
- la figure 5 est une vue de face, côté diaphragme, d'une butée qui ne conforme pas à l'invention ;
- la figure 6 montre une vue partielle en coupe axiale de cette butée ;
- la figure 7 en est une vue en perspective en configuration assemblée ;
- la figure 8 est une vue frontale de détail, fortement agrandie, d'une partie de la butée des figures 5 à 7 ; et
- les figures 9 et 10 sont des vues, respectivement en perspective éclatée et en coupe axiale partielle d'une butée d'embrayage qui n'est pas selon l'invention.

Les butées d'embrayage représentées à titre d'exemple sur les figures appartiennent à la catégorie des embrayages que les spécialistes appellent généralement "embrayages à mécanisme poussé". Toutefois, l'invention s'applique également à d'autres catégories d'embrayages dans lesquels elle pourrait être incorporée éventuellement moyennant les adaptations nécessaires. L'invention n'est donc pas limitée à une catégorie particulière d'embrayages.

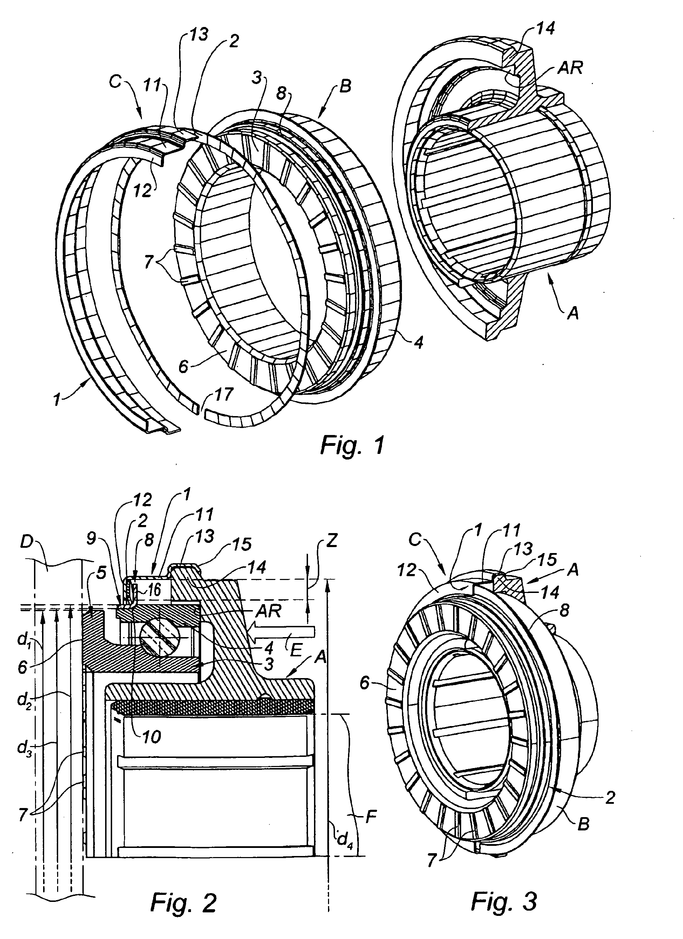

Ceci étant précisé, la butée représentée sur les figures 1 à 3 comprend un manchon de manoeuvre A, un roulement B et des moyens d'accrochage C. Ces derniers sont formés d'une cuvette de fermeture 1 et un élément élastique annulaire qui est ici une rondelle élastique ondulée 2. Comme on le voit représenté schématiquement sur la figure 2, la butée coopère avec un diaphragme D et est actionnée par des moyens de commande classiques non décrits symbolisés par la flèche E. Le manchon A est destiné à être emmanché sur le tube guide F, de la façon bien connue des spécialistes.

Les moyens de commande E peuvent être de type purement mécanique ou comprendre un actionneur électropneumatique ou hydraulique.

Le roulement B comprend une bague intérieure 3 et une bague extérieure 4. La bague intérieure 3 présente en section axiale une forme en L de façon à définir une aile radiale frontale 5 qui s'étend devant la face frontale 4a de la bague extérieure 4 et dont le diamètre extérieur d1 est très peu inférieur au diamètre extérieur d2 de cette dernière. L'écart entre ces diamètres peut être inférieur à 3mm par exemple.

Un tel roulement est préféré parce que, d'une part la dimension radiale en est plus faible que celle des roulements classiques utilisés dans les butées d'embrayage, et d'autre part, la face frontale 6 de l'aile 5 offre une aire d'appui importante aux doigts du diaphragme D. Des nervures radiales 7 sont de préférence prévues sur cette face frontale 6 pour améliorer encore la prise de la bague intérieure 3 sur le diaphragme D. La bague 3 est de préférence forgée, puis usinée.

Les moyens d'accrochage C sont conçus selon l'invention pour s'adapter à la forme particulière de roulement B telle que l'on vient de la décrire. Dans le présent exemple de réalisation, ces moyens d'accrochage comprennent un anneau d'appui 8 à section radiale en forme d'équerre dont la partie cylindrique présente un diamètre intérieur d3 qui est très précisément ajusté à celui d'une portée axiale 9 ménagée sur une partie de la surface extérieure de la bague 4. Cette portée 9 est obtenue de préférence par usinage de cette surface extérieure et y définit un épaulement radial 10 contre lequel est poussé l'anneau d'appui 8 lors de son montage sur la bague 4. Il s'agit ici d'un montage à ajustement serré de sorte que le roulement B et l'anneau d'appui 8 constituent avantageusement un ensemble dit "de livraison" c'est-à-dire une unité pouvant être fournie comme une entité monobloc. L'anneau d'appui est réalisé de préférence par estampage.

On remarquera également que l'anneau d'appui 8 est placé autour de la bague extérieure 4 de manière que le bord libre de sa partie axiale affleure la face frontale 4a de la bague 4 tournée vers l'aile radiale 5 de la bague intérieure 3.

La cuvette de fermeture 1 est de forme générale annulaire et comprend une partie cylindrique 11 étagée d'où un flan 12 s'étend radialement vers l'intérieur. La bande 13 de plus grand diamètre de la partie cylindrique 11 vient coiffer un bourrelet extérieur 14 ménagé sur le manchon A, bourrelet derrière lequel elle est sertie en 15 sur toute sa périphérie.

Le flan 12 est contigu au flan radial 16 de l'anneau d'appui 8. La rondelle élastique ondulée 2 est comprimée entre eux sous une tension permanente et s'appuie sur le flan 12 dans une zone annulaire z située dans le cas présent totalement en dehors du périmètre extérieur de la bague extérieure 4. Ainsi, les moyens d'accrochage C serrent le roulement contre la face radiale AR du manchon A.

On remarquera également que, dans le présent mode de réalisation, la rondelle élastique ondulée 2 est ouverte (en 17, figure 1), mais elle peut également être fermée.

L'agencement qui vient d'être décrit présente plusieurs avantages par rapport à la réalisation antérieure du document US 3 416 637. Le roulement B est moins encombrant, tant radialement qu'axialement et nécessite donc moins de matière première. De par sa dimension radiale réduite, la cuvette de fermeture 1 est plus courte d'où également une économie de matière. Enfin, la rondelle élastique 2 est située à l'écart du joint du roulement B et ne peut donc en aucun cas endommager celui-ci.

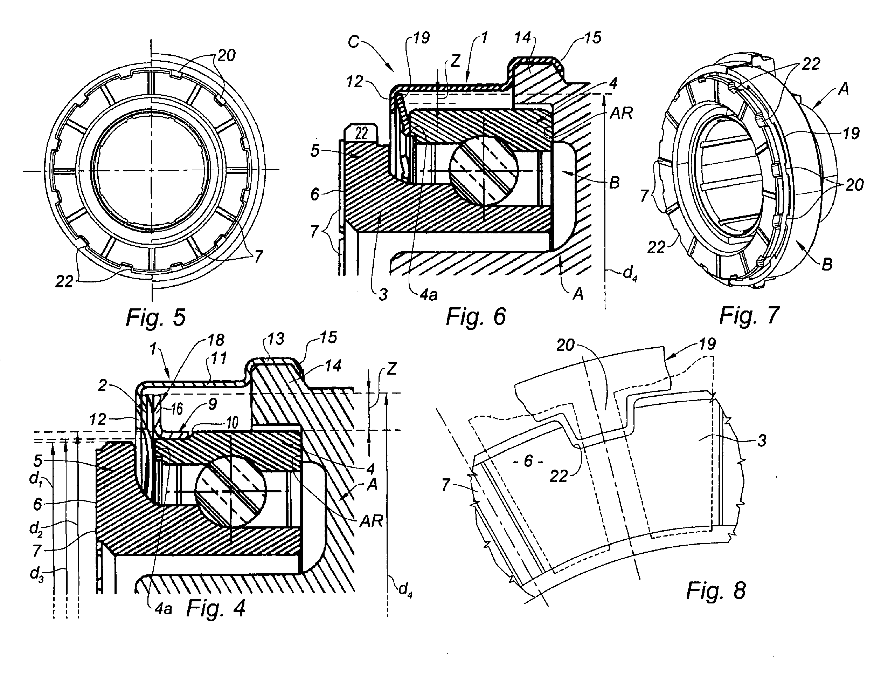

La figure 4 représente une variante du mode de réalisation des figures 1 à 3. Il y est prévu un anneau d'appui 18 disposé en position inverse par rapport à l'anneau 8, sur la portée axiale usinée 9 de la bague intérieure 3 du roulement B. La cuvette 1 présente une longueur axiale légèrement supérieure à celle du précédent mode de réalisation, en serrant la rondelle élastique ondulée 2 contre la surface extérieure du flan radial 16 de l'anneau d'appui 18.

On voit dans ce cas également que la rondelle élastique 2 est en appui contre le flan radial 12 de la cuvette 1 dans une zone annulaire z située en totalité en dehors de la surface périphérique de la bague extérieure 4.

Par ailleurs, on peut noter que l'anneau d'appui 18 est ici placé autour de la bague extérieure 4 de manière que son flan radial 16 affleure la face frontale 4a de la bague 4 tournée vers l'aile radiale 5 de la bague intérieure 3.

Dans la butée des figures 5 à 8, les moyens d'accrochage C comportent une rondelle élastique conique 19 qui présente des pattes 20 s'étendant radialement vers l'intérieur de la rondelle hors de son plan général (voir notamment la figure 8). Ces pattes sont destinées à venir s'appliquer directement sur la face frontale 4a de la bague extérieure 4 du roulement B en s'insérant légèrement dans l'intervalle présent entre cette face frontale 4a et l'aile radiale 5 de la bague intérieure 3. Pour permettre la mise en place de cette rondelle conique 19, la bague intérieure 3 est ici pourvue d'échancrures 22 qui y sont ménagées axialement à la périphérie de préférence lors de son forgeage.

La rondelle conique élastique 19 s'appuie d'autre part sur le flan radial 12 de la cuvette 1 dans une zone annulaire z qui est ici également totalement située en dehors de la surface périphérique de la bague extérieure 4 (voir la figure 8).

Les échancrures 22 sont de préférence ménagées angulairement à mi-chemin entre les nervures frontales 7 de la bague intérieure 3 afin que, même en position de débrayage maximale, le diaphragme D demeure toujours en contact avec cette dernière.

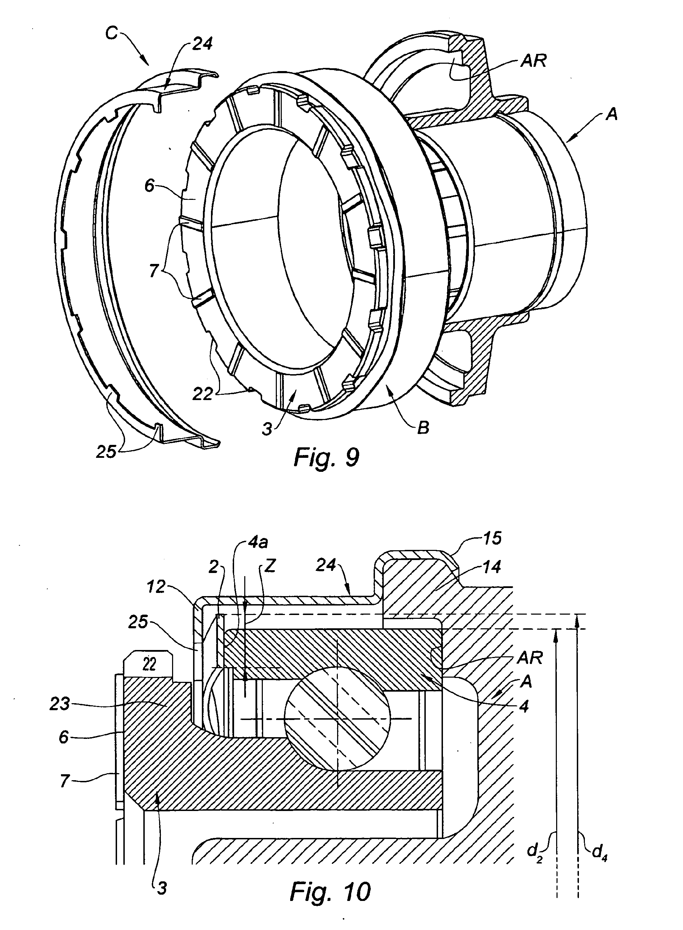

Dans la butée des figures 9 et 10, il est prévu un roulement B dont la bague intérieure 3 présente un épaulement annulaire 23 situé dans l'angle intérieur de sa forme en L. Autour de cet épaulement est ajustée avec un léger jeu une rondelle élastique ondulée 2 qui est ici donc située au moins en partie dans l'intervalle annulaire séparant la bague extérieure 4 de l'aile radiale 5 de la bague intérieure 3. En d'autres termes, cette rondelle est emprisonnée dans le roulement B au moment de l'assemblage de ce dernier et forme avec lui un ensemble de livraison unitaire. L'épaulement 23 évite le risque d'endommagement du joint du roulement B par la rondelle élastique 2 pendant les manipulations de celui-ci.

La butée d'embrayage comprend en outre une cuvette 24 (figure 10) dont le flan d'appui 12 présente des pattes 25 angulairement espacées et s'étendant radialement vers l'intérieur. L'aile radiale 5 de la bague intérieure 3 comporte dans ce cas également des échancrures 22 entre lesquelles peuvent passer les pattes radiales 25 lors de l'assemblage de la cuvette 1 sur le manchon A. La rondelle élastique ondulée 2 prend appui non seulement sur le flan 12, mais également sur les pattes radiales 25 ce qui offre ainsi une aire d'appui importante à la rondelle.

On remarquera que dans ce cas, l'appui de la rondelle 2 sur le flan 12 se fait dans une zone z partiellement située en dehors de la périphérie de la bague extérieure 4. La rondelle 2 s'appuie d'autre part sur la face frontale 4a de la bague extérieure 4.

Dans tous les modes de réalisation de l'invention décrits ci-dessus, l'accrochage du roulement sur le manchon en permet l'autocentrage grâce aux jeux radiaux prévus entre les différentes pièces de la butée.

## Revendications

1. Butée d'embrayage, notamment de type poussé, comprenant un manchon de manoeuvre (A) destiné à être déplacé en translation axiale par des moyens de commande (E) de l'embrayage, un roulement (B) accroché à ce manchon (A) et dont la bague intérierure (3) est conformée de manière à agir sur le diaphragme (D) de l'embrayage et comporte à cet effet une aile radiale (5) s'étendant vers l'extérieur devant la face frontale (4a) de la bague extérieure (4) dudit roulement (B), ce roulement étant, en vue d'assurer son autocentrage par rapport à l'axe dudit manchon (A), accroché à ce manchon par l'intermédiaire de moyens d'accrochage (C) comprenant une cuvette (1; 24), placée autour du manchon (A) et serrant ledit roulement (B) contre une face radiale (AR) du manchon par l'intermédiaire d'un élément élastique annulaire (2; 19) prenant appui sur un flan radial (12) de ladite cuvette (1; 24),butée d'embrayage dans laquelle ledit élément élastique annulaire (2; 19) présente un diamètre extérieur (d4) qui dépasse au moins partiellement le diamètre extérieur (d2) de ladite bague extérieure (4) et est en appui contre ledit flan radial (12) de la cuvette (1; 24) dans une zone annulaire (z) située au moins en partie à l'extérieur du périmètre extérieur de ladite bague extérieure (4) **caractérisé en ce qu'**un anneau d'appui (8; 18) est monté avec ajustement serré autour de ladite bague extérieure (4), ledit anneau (8; 18) présentant une section en forme d'équerre sur le flan radial (16) de laquelle s'appuie ledit élément élastique annulaire (2).

2. Butée selon la revendication 1, dans laquelle ledit anneau d'appui (8; 18) est emmanché sur une portée axiale (9) ménagée sur la surface cylindrique extérieure de ladite bague extérieure (4) et formant avec celle-ci un épaulement axial (10) contre lequel est placé ledit anneau d'appui (8; 18).

3. Butée selon l'une des revendications 1 et 2 dans laquelle ledit anneau d'appui (8) est placé autour de ladite bague extérieure (4) de manière que le bord libre de sa partie axiale affleure la face frontale (4a) de la bague (4) tournée vers l'aile radiale (5) de la bague intérieure (3).

4. Butée selon l'une des revendications 2 et 3, dans laquelle ledit anneau d'appui (18) est placé autour de ladite bague extérieure (4) de manière que son flan radial (16) affleure la face frontale (4a) de la bague (4) tournée vers l'aile radiale (5) de la bague intérieure (3).

5. Butée selon l'une quelconque des revendications 1 à 4, dans laquelle ledit élément élastique annulaire est une rondelle conique (19).

## Patentansprüche

1. Kupplungsausrücklager, insbesondere von der gedrückten Art, umfassend eine Betätigungsmuffe (A), die dazu bestimmt ist, durch Steuermittel (E) der Kupplung axial verschoben zu werden, ein an diese Muffe (A) angekoppeltes Wälzlager (B), dessen innerer Ring (3) angepasst ist, um auf die Membranfeder (D) der Kupplung zu wirken und dazu einen radialen Flansch (5) aufweist, der sich vor der Vorderseite (4a) des äußeren Rings (4) des Wälzlagers (B) radial nach außen erstreckt, wobei das Wälzlager im Hinblick auf die Sicherstellung seiner Selbstzentrierung relativ zur Achse der besagten Muffe (A) an diese Muffe unter Zwischenfügung von Ankopplungsmitteln (C) angekoppelt ist, welche eine Schale (1; 24) umfassen, die um die Muffe (A) herum angeordnet ist und das besagte Wälzlager (B) unter Zwischenfügung eines ringförmigen elastischen Elements (2; 19), welches auf einer radialen Ringplatte (12) der besagen Schale (1; 24) aufliegt, gegen eine radiale Fläche (AR) der Muffe spannt, wobei in dem Kupplungsausrücklager das ringförmige elastische Element (2; 19) einen Außendurchmesser (d4) aufweist, der zumindest teilweise den Außendurchmesser (d2) des besagten äußeren Rings (4) überragt, und in einem ringförmigen Bereich (z), der zumindest teilweise außerhalb des äußeren Kreisumfangs des besagten äußeren Rings (4) liegt, in Anlage gegen die besagte radiale Ringplatte (12) der Schale (1; 24) ist, **dadurch gekennzeichnet, dass** ein Auflagering (8; 18) mit einer Presspassung um den besagten äußeren Ring (4) herum montiert ist, wobei der besagte Ring (8; 18) einen Querschnitt in der Form eines Winkels aufweist, auf dessen radialer Ringplatte (16) sich das besagte ringförmige elastische Element (2) abstützt.

2. Ausrücklager nach Anspruch 1, wobei der besagte Auflagering (8; 18) auf eine axiale Auflagefläche (9) eingelassen ist, welche in die äußere zylindrische Oberfläche des besagten äußeren Rings (4) eingebracht ist und mit dieser einen axialen Ansatz (10) bildet, gegen den der besagte Auflagering (8; 18) angeordnet ist.

3. Ausrücklager nach einem der Ansprüche 1 oder 2, wobei der besagte Auflagering (8) in der Art um den besagten äußeren Ring (4) herum angeordnet ist, dass der freie Rand seines axialen Teils bündig mit der Vorderseite (4a) des Rings (4), die dem radialen Flansch (5) des inneren Rings (3) zugewandt ist, abschließt.

4. Ausrücklager nach einem der Ansprüche 2 oder 3, wobei der besagte Auflagering (18) in der Art um den besagten äußeren Ring (4) herum angeordnet ist, dass seine radiale Ringplatte (16) bündig mit der Vorderseite (4a) des Rings (4), die dem radialen Flansch (5) des inneren Rings (3) zugewandt ist, abschließt.

5. Ausrücklager nach einem der Ansprüche 1 bis 4, wobei das ringförmige elastische Element eine konische Scheibe (19) ist.

## Claims

1. Clutch bearing, notably of the push type, comprising an operating sleeve (A) intended to be moved in axial translation by control means (E) of the clutch, a rolling bearing (B) attached to this sleeve (A) and the inner ring (3) of which is shaped in such a way as to act on the diaphragm (D) of the clutch for which purpose it has a radial flange (5) extending outwards in front of the front face (4a) of the outer ring (4) of said rolling bearing (B), to ensure its self-centring in relation to the axis of said sleeve (A) this bearing being attached to this sleeve by attachment means (C) comprising a cup (1; 24), placed around the sleeve (A) and pressing said rolling bearing (B) against a radial face (AR) of the sleeve via an annular elastic element (2; 19) bearing against a radial surface (12) of said cup (1; 24), clutch bearing in which said annular elastic element (2; 19) has an outside diameter (d4) which at least partially extends beyond the outside diameter (d2) of said outer ring (4) and bears against the radial surface (12) of the cup (1; 24) in an annular zone (z) at least partially situated outside the external perimeter of said outer ring (4), **characterised in that** a bearing ring (8; 18) is mounted in a tightly fitting manner around said outer ring (4), said ring (8; 18) having a square-shaped section on the radial surface (16) against which said annular elastic element (2) presses.

2. Bearing according to claim 1, in which said bearing ring (8; 18) is fitted on an axial bearing (9) arranged on the outer cylindrical surface of said outer ring (4) and forming with it an axial shoulder (10) against which said bearing ring (8; 18) is placed.

3. Bearing according to any one of claims 1 and 2, in which said bearing ring (8) is placed around said outer ring (4) in such a way that the free edge of its axial part is flush with the front face (4a) of the ring (4) facing the radial flange (5) of the inner ring (3).

4. Bearing according to any one of claims 2 and 3, in which said bearing ring (18) is placed around said outer ring (4) in such a way that its radial surface (16) is flush with the front face (4a) of the ring (4) facing the radial flange (5) of the inner ring (3).

5. Bearing according to any one of claims 1 to 4, in which said annular elastic element is a conical washer (19).
